# EUROPEAN PATENT SPECIFICATION

(11) **EP 1 222 791 B1**
(45) Date of publication and mention of the grant of the patent: **01.06.2005**
(21) Application number: 00975338.5
(22) Date of filing: 20.10.2000
(51) Int. Cl.: H04L 29/06, G06F 17/30

(54) **System und method for redirecting users attempting to access a network site**
System und Verfahren zur Weiterleitung von Zugriffsversuchen von Benutzern auf eine Netzwerksite
Système et procédé permettant de réorienter des utilisateurs qui tentent d'accéder à un site de réseau

(30) Priority: 22.10.1999 US 161182 P; 22.10.1999 US 160890 P; 22.10.1999 US 161139 P; 22.10.1999 US 161189 P; 22.10.1999 US 160973 P; 22.10.1999 US 161181 P; 22.10.1999 US 161093 P; 08.12.1999 US 458569; 08.12.1999 US 458602
(43) Date of publication of application: 17.07.2002
(73) Proprietor: Nomadix, Inc., Westlake Village, California 91361 (US)
(72) Inventor: SHORT, Joel, E., Los Angeles, CA 90049 (US); DELLEY, Frederic, Redwood City, CA 94065 (US); LOGAN, Mark, F., Santa Monica, CA 90405 (US); PAGAN, Florence, C., I., Los Angeles, CA 90025 (US)
(74) Representative: Chettle, Adrian John
(86) International application number: PCT/US2000/029173
(87) International publication number: WO 2001/031886

(56) References cited:
- EP-A- 0 848 338
- EP-A- 0 889 418
- EP-A- 0 986 230
- WO-A-96/39668
- WO-A-98/12643
- WO-A-99/57865
- US-A- 5 761 683

## Description

### FIELD OF THE INVENTION

The present invention relates generally to network redirection, and, more particularly, to systems and methods for redirecting users from one requested network destination to one or more different network destinations.

### BACKGROUND OF THE INVENTION

Through gateway devices or routers, Internet Service Providers (ISPs) or enterprise network (such as a LANs) providers can permit a wide variety of users access to their networks and to other online services. To take advantage of user access to their computer networks and online services enterprise networks or ISPs should be able to redirect users to network destinations, such as web pages or customized portal pages. that the enterprise or Internet service providers wish the user to access or view. For instance, where a user is located at an airport, the service provider at the airport may wish to direct the user to a portal page airport information (e.g., flight arrival and departure information), to a portal page having the user's itinerary thereon, or to a web page related to the airport or city in which the airport is located to provide the user an incentive to access the network, even though the user requests another page, such as a home page at his enterprise. ISPs, for example, may wish users to access the ISP's web page for up to the date news and weather, information regarding the user's Internet service, and paid advertisements.

Web page redirection has been previously accomplished. For example, America Online (AOL) users, upon accessing the Internet, are directed to an AOL home page from which the users can select a variety of AOL services, and which includes advertising from various companies. Typically, direction of users to such a page benefits the ISP because advertisers pay money to the ISP each time a user accesses the Internet, as subscribers are a captive audience to advertising. Advertisers pay for such advertising not only because of the captive audience, but because advertisers can tailor advertisements based upon the typical audience accessing the Internet. Furthermore, AOL may market its services through its home page, and its home page may be attractive to potential subscribers. Directing users to a particular web page or portal page may serve an additional function. users may be directed to a portal page, such as a login page, so that the user may enter login information to be authenticated and authorised access on the network. Furthermore, users may wish to establish their own specialized page, such as a page including favorite links, a page linking the user to the user's business, or a page including any other items relevant to the user.

However, such redirection of users to web pages has been traditionally based upon software installed on a user's computer and/or configurations of user computers in communication with a primary network. For example, where a user's computer is appropriately configured for access to a primary network, the user's computer can be configured to access a particular web page (or home page) on that network. This can be the case, for example, in businesses where users' computers are configured to access an intranet home page or an Internet page specific to that company and located on the Internet.

For example, International Publication Number WO 98/12643, entitled, "Method and Apparatus for Creating and using Dynamic Universal Resource Locators", published on 26 March 1998, in the name of applicant National Systems Corporation, discloses use of a dynamic URL to link the user to a selected host. However, this teaching is limited to redirection when the user requests a new URL and does not provide for a system where every web page request that is initiated by the user, i.e., a URL, a domain name request or a specific IP address, can be redirected. Additionally, the WO 98/12643 teaching requires modification of the normal DNS/URL request lookup and therefore redirection is permanent as opposed to temporal.

In yet another example, European Patent Application No. EP 0 889 418 A2, entitled, "Abstract URL Resolution Via Relocation Service", published on 07 January 1999, in the name of applicant Sun Microsystems, Incorporated, discloses a web page server that provides URL abstraction and dynamic URL resolution. However, redirection is limited to a process that uses an absract URL and requires modifying at a host web page server, i.e., the user must request the web page server that this abstract URL resolution resides on. The process does not allow for every request coming from the user to be potentially redirected.

Therefore, methods and systems would be desirable that enable users transparent access to a computer network employing a gateway device where the computer network can provide access to users and redirect the users to network destinations (e.g., web pages or portal pages) established by the user, network administrator or another entity. Furthermore, such redirection should be able to redirect users to a login page when the system determines that the user does not otherwise have access to online services or networks, so that the user may establish access rights to the network.

### SUMMARY OF THE INVENTION

The present invention includes a method and system for redirecting users to network destinations according to claims 1-10.

### BRIEF DESCRIPTION OF THE DRAWINGS

FIG. 1 is a block diagram of a computer system that includes a gateway device for automatically redirecting computer browsers from a requested network destination to a different network destination, according to one embodiment of the present invention.
FIG. 2 is a block diagram illustrating the steps taken by a browser and server in a conventional web page request.
FIG. 3 is a block diagram illustrating the redirection function of the method and system of the present invention, according to one aspect of the invention.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

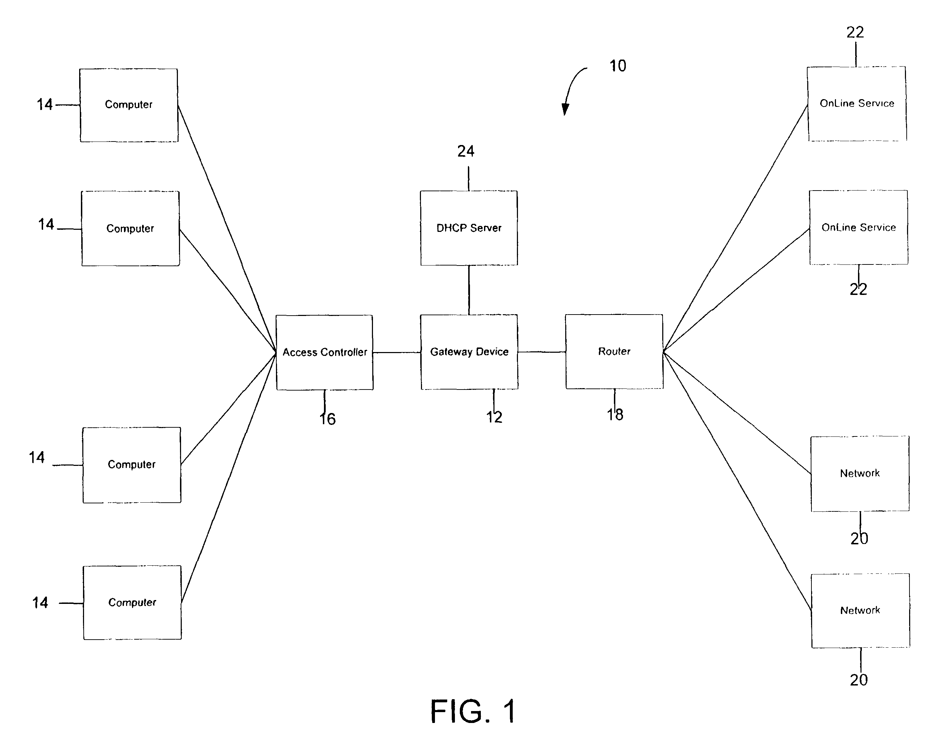

Referring now to FIG. 1, a computer system **10** for implementing a redirection method according to one embodiment of the invention is illustrated in block diagram form. The computer system **10** includes a plurality of computers 14 that can communicate with one or more online services **22** or networks via a gateway device **12** providing the interface between the computers **14** and the various networks **20** or online services **22.** One embodiment of such a gateway has been described in International Publication No. WO 98/40990 and U.S. Patent US 6 636 894 (collectively referred to herein as the Gateway Device Applications). Briefly, the gateway device **12** facilitates transparent computer access to the online services **22** or networks **22**, such that the computers **14** can access any networks via the device **12** regardless of their network configurations. Additionally, the gateway device **12** includes the ability to recognize computers attempting to access a network **20**, the location of computers attempting to access a network, the identity of users attempting to gain network access, and additional attributes, as is discussed in the Gateway Device Applications.

As illustrated in FIG. 1, the computer system **10** also includes an access concentrator **16** positioned between the computers **14** and the gateway device **12** for multiplexing the signals received from the plurality of computers onto a link to the gateway device **12**. Depending upon the medium by which the computers **14** are connected to the access concentrator, the access concentrator **16** can be configured in different manners. For example, the access concentrator can be a digital subscriber line access multiplexer (DSLAM) for signals transmitted via regular telephone lines, a cable head end (a Cable Modem Termination Shelf (CMTS)) for signals transmitted via coaxial cables, a wireless access point (WAP) for signals transmitted via a wireless network, an Ethernet switch, or the like.

The computer system **10** further includes one or more routers **18** and/or servers (not shown in FIG. 1) to control or direct traffic to and from a plurality of computer networks **20** or other online services **22**. While the computer system **10** is depicted to have a single router, the computer system **10** can have a plurality of routers, switches, bridges, or the like that are arranged in some hierarchical fashion in order to appropriately route traffic to and from the various networks **20** or online services **22**. In this regard, the gateway device **12** typically establishes a link with one or more routers. The routers, in turn, establish links with the servers of the networks **20** or online services **22**, based upon the user's selection. It will be appreciated by one of ordinary skill in the art that one or more devices illustrated in FIG. 1 may be combinable. For example, although not shown, the router **18** may be located entirely within the gateway device **12.** Furthermore, additional elements may be included in the computer system **10,** such as elements disclosed in the Gateway Device Applications, or network elements known to those of ordinary skill in the art.

As described in the Gateway Device Applications, the gateway device **12** is specifically designed to adapt to the configuration of each of the computers **14** that log onto the computer system **10** in a manner that is transparent to the user and the computer networks **20** or online services **22**. In the embodiment shown in FIG. 1, the computer system **10** employs dynamic host configuration protocol (DHCP) service, which is a protocol well known to those of skill in the art and currently implemented in many computer networks. In DHCP networks an IP address is assigned to an individual computer of the plurality of computers **14** when the computer logs onto the computer network through communication with the gateway device **12**. The DHCP service can be provided by an external DHCP server **24** or it can be provided by an internal DHCP server located within the gateway device.

In order to allow a user of the computer to communicate transparently with computer networks **20** or online services **22**, the gateway device must be able to communicate with the user computer, as well as the various online services **22** or networks **20**. In order to support this communication, the gateway device **12** generally performs a packet translation function that is transparent to both the user and the network. In this regard, for outbound traffic from a computer to a network or on-line service, the gateway device **12** changes attributes within the packet coming from the user, such as the source address, checksum, and application specific parameters, to meet the criteria of the network to which the user has accessed. In addition, the outgoing packet includes an attribute that will direct all incoming packets from the accessed network to be routed through the gateway device. In contrast, the inbound traffic from the computer network or other online service that is routed through the gateway device undergoes a translation function at the gateway device so that the packets are properly formatted for the user's host computer. In this manner, the packet translation process that takes place at the gateway device **12** is transparent to the host, which appears to send and receive data directly from the accessed computer network. It will be appreciated that the ability to intercept data, and the ability to interface with user computers and networks, is essential to the redirection method of the present invention as described in detail below.

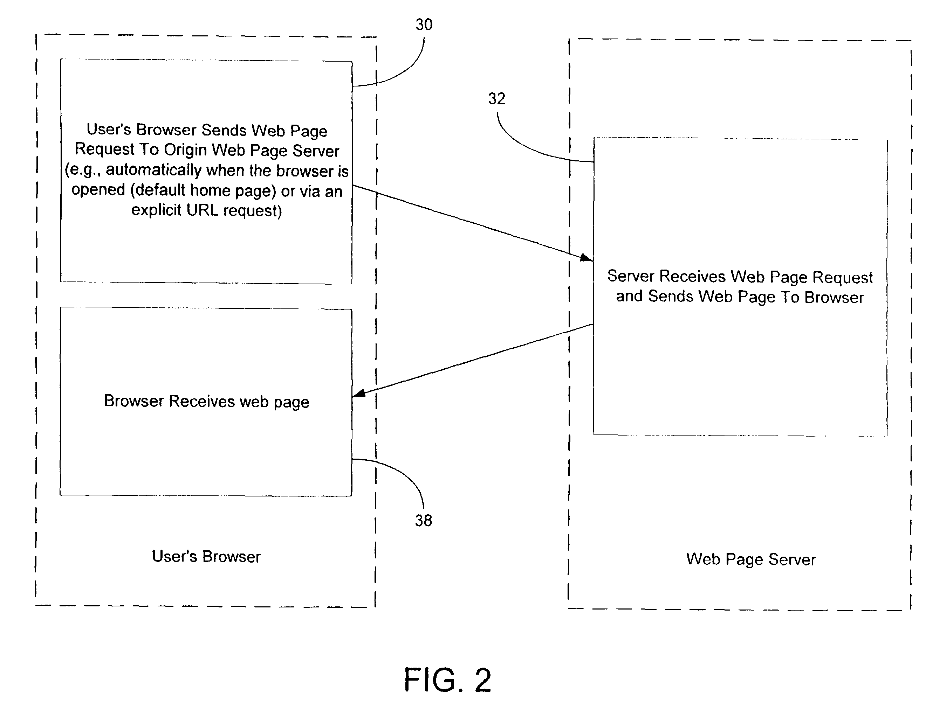

In conventional network access systems, a user typically communicates with a network through the use of a browser, which the user also utilizes to request a particular network destination. For example, when accessing the Internet through an ISP, a user can input a specific URL or web address into the browser, which then accesses a particular web page for the user. This is accomplished in four steps, illustrated in FIG. 2. First, after the user requests a particular web page (block 30), the browser sends a Transmission Control Protocol (TCP) request to the origin server, which is the location of the web page requested (e.g., www.yahoo.com). TCP requests are well known to those of skill in the art, and may be referred to hereinafter as web page requests. Next, the browser receives an acknowledgment response from the origin server that the web page request has been received (block 32). Third, after the browser receives the acknowledgment response, the browser then sends an HTTP request to receive the web page. Finally, upon receipt of the HTTP request the web page will send the web page material to the browser (block 32), which receives the web page (block 38).

Systems and methods of the present invention interrupt this conventional process to redirect users to a destination other than that requested by the user. This is accomplished by a gateway device, as described above, or similar hardware which stands between the user's computer and network destinations for permitting network access. The hardware must include one or more processors and network interface devices to intercept data transmitted from computers to the networks, process and manipulate the data, forward the data to desired network locations, and vice versa. Thus, although a gateway device will be used herein to illustrate the redirection capability of systems and methods of the present invention, it will be appreciated that any hardware performing an intermediate role between computers and networks can implement the present invention.

The redirection of users may be accomplished by the entity maintaining such hardware, such as an ISP, or an entity maintaining a local network. For instance, according to one aspect of the invention, the redirection method of the present invention may first direct a user to a login page and require that a user enter a login name and password so that the ISP or other entity maintaining the gateway device **12** can identify the user. This may occur where the gateway device or a similar authentication device, such as a AAA server described in the Gateway Device Applications, is unable to identify and/or determine access rights of the source requesting access. Alternatively, the user may be redirected to a particular network destination (e.g., an Internet web page), or to a portal page established by the entity redirecting the user.

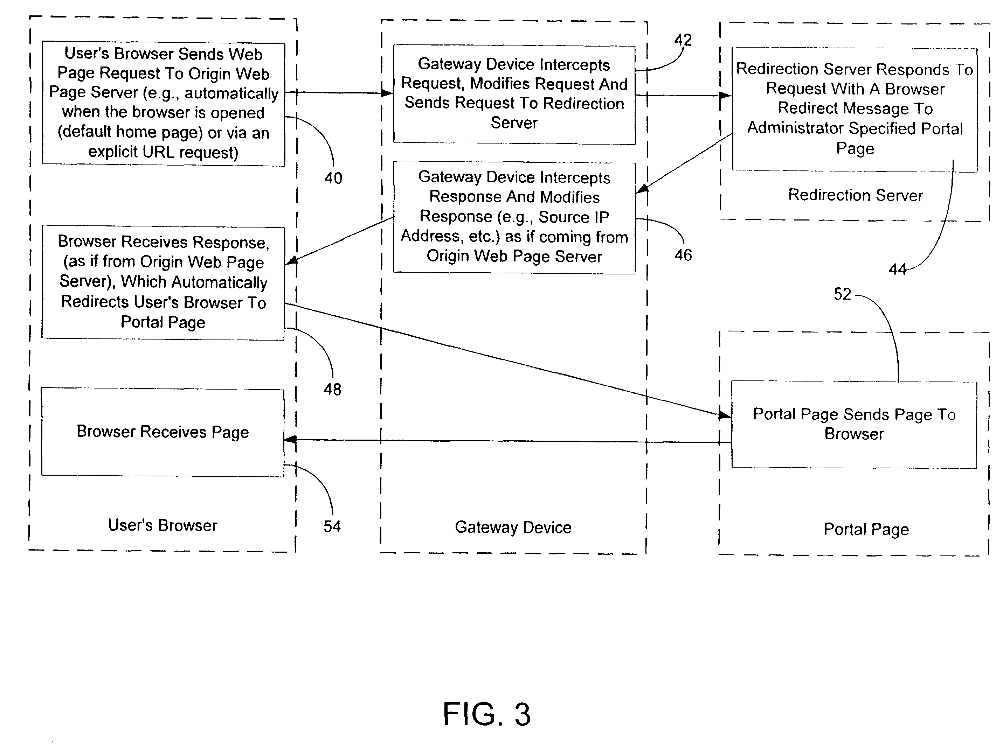

According to one embodiment of the invention, redirecting users is accomplished by a Home Page Redirect (HPR) process performed by the gateway device **12**, or by a redirect unit **28** in communication with and internal to or external to the gateway device **12**. Although the redirect unit **28** may be used to implement the redirection function, the gateway device will be solely referred to herein for purposes of brevity. A redirection function according to one aspect of the invention is illustrated in FIG. 3.

To accomplish the redirection of a user to a portal page, the gateway device **12** intercepts a original web page request sent by the user's browser to the origin server (user-requested destination) (blocks **40, 42**), and records the identity of the origin server. After intercepting the request the gateway device **12** modifies the request (block **42**) so that the request is sent to a redirection server, which is a temporary server located internal or external to the gateway device **12.** After receiving the redirected web page request (block **42),** the redirection server sends a response (block **44),** through the gateway device (block **46),** to the user's browser. The gateway device **12** intercepts the response and redirection from the redirection server and modifies the response so that the response will appear as though it is coming from the origin server. Specifically, the gateway device **12** may modify the IP header in the response to indicate that the gateway device **12** is the web page requested by the user (block **46**). The response from the redirection server indicates that the redirection server is the requested web page. The response additionally includes instructions redirecting the browser to the portal page, and an autorefresh message. After the user's browser receives the redirect message (block **48**), the browser will trigger a get request for the portal page (block **48**), which is received by the portal page (block **52**). The portal page then sends (block **52**) the portal page to the user's browser (block **54**).

As a result of this stack address translation and redirection, which can be implemented entirely within the gateway device, when the browser receives a response to the browser's web page request, the browser does not appreciate that the requested web page was never retrieved. Therefore, the role of the gateway device is transparent to the browser.

According to one aspect of the invention, the redirection server's protocol stack pretends to be the user-entered destination long enough to complete a connection or 'handshake', after which the protocol stack directs the user to the portal server, which can be local to the gateway device to facilitate higher speed communication. This redirection to the portal server can be accomplished by redirecting web pages only, rather than all traffic, including E-mails, FTPs, or any other traffic. Therefore, once authorized, if a user does not attempt to access a web page through the user's Internet browser, the gateway device can forward the communication transparently to the user's requested destination without requiring the user to access the portal page.

According to another aspect upon entering a requested network destination a user may be redirected to a particular portal page based on the user's identity, computer, location or one or more additional attributes, as described in detail in the Gateway Device Applications. For example, if, according the AAA process a user is not recognized, the user may be redirected via the above described method to a portal page, such as a login page established to validate new users or allow users to purchase network access. The login page enables new users to subscribe to the computer network so that they may subsequently obtain access to networks or online services transparently through the gateway device. Thus, new users can gain access to networks or online services without being predefined in any type of user database, such as a RADIUS database.

Thereafter, the redirect unit **28** can forward the user to the user's requested destination, or can direct them to a different page, depending upon the design of the system. This redirection can be permanent, such that the user is directed to a specific destination and may not access other destinations, or may be temporary, such that a user is forced to a specific destination after which the user can access any destination. Furthermore, after being redirected to a portal page, a user may be required to take some type of action before being routed to their desired destination, such as providing information in response to a request to do so.

By re-directing the user to the portal page via the redirect unit the gateway administrator or network operator is provided the opportunity to present the user with updated information pertaining to the network or the user's location. This is particularly useful where the redirection is implemented through a network device on a local network, such as a corporate, hotel or airport network. By way of example, the portal page may provide for links to the corporate home page, a travel site on the Internet, an Internet search engine and a network provider home page. Additionally, the buttons or any other field within the portal page may include other types of information options, such as advertising fields or user-specific links or fields based upon data found in the user's profile or inputted by the user.

It will be appreciated that the portal page is not limited to supplying information related to the user's billing and service plans. It is also possible to configure the portal page to include information that is customized to the user or the location/site from which the user is remotely located, where the gateway device has the ability to identify such information. For example, the user may be located at a hotel for the purpose of attending a specific convention or conference either in the hotel or within the immediate vicinity of the hotel. The gateway device 12 may have "learned" this information about the user through an initial login profile inquiry or the gateway administrator may have inputted this information into a database. Thus, the gateway device can be configured to recognize the user and customize or tailor the portal page accordingly. In the hotel scenario, the portal page may include a link for convention or conference services offered by the hotel. The gateway device can store source profile information within a user-specific database, such as a RADIUS database, or it can store and retrieve data from external databases.

According to one aspect of the present invention, the redirection function of the system and method of the present invention can be utilized to redirect the user to a destination any time the user enters a destination request. Therefore, the present invention is not limited to redirecting the user to a particular destination or portal page upon the user's initial attempt to access the secondary network or destinations via the secondary network. Therefore, where a user accesses the Internet through the gateway device the present invention can monitor each packet transmitted from the user's computer and perform a redirection function when desired. For example, a user may surf the Internet without limitation until the user attempts to access a particular auto manufacturer's website. Thereafter, the system and method of the present invention could automatically direct the user to another manufacturer's website using the redirection capability of the present invention. The user may be presented with an advertisement from a particular manufacturer before being forwarded to the requested destination. According to yet another aspect of the invention, the user's browser or computer may be redirected to receive a pop-up advertisement or frame during the forwarding of the user to the requested destination, periodically, or after the user has already been granted access to the requested destination.

In another example of location specific portal page data, the user may be remotely accessing the gateway device while located in a specific airport terminal. The gateway device will be configured so that it is capable of providing ready access to information related to that specific airport terminal, i.e. information pertaining to the current flights scheduled to depart and arrive that terminal, the retail services offered in that specific terminal, etc. In this manner, the portal page may include a link for terminal specific flight information and/or terminal specific retail services available to the user.

It will also be appreciated that the HPR may be configured so that the portal page redirection unit **28** redirects a user to a portal page upon specific default occurrences, such as a time out, or according to preset time. For example, the portal page may act as a screen-saver, where the user is redirected to a portal page after a given period of inactivity. These functions may be established by the ISP or enterprise network administrator.

Customization of the information comprising the portal page is not limited to the gateway administrator or the network operator. The user may also be able to customize the information that is provided in the portal page. The user customization may be accomplished either directly by the user configuring the portal page manually or indirectly from the gateway device configuring the portal page in response to data found in the user-specific profile. In the manual embodiment the user may be asked to choose which information or type of information they would like supplied in the portal page for that specific network session. For instance, the user may require an alarm clock counter to insure an appointment is met or the user may require periodic updates of a specific stock quote. The information that a user customizes for the portal page may be network session specific, may be associated with the duration of a gateway subscription or may be stored in a source profile for an indefinite period of time. The gateway device's ability to communicate with numerous user databases provides the basis for storing user specific profiles for extended periods of time.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for redirecting a user's request for access to a destination address, via a host in communication with a network, comprising:
receiving at a gateway device a request from a host for access to the destination address;
determining if the user is entitled to access to the network;
collecting any additional login information from the user that is required to access the network;
storing the requested destination address;
the method being **characterised by** the steps of,
modifying, at the gateway device, the request and sending the request to a redirection server (42);
responding, at the redirection server, to the request with a browser redirect message that reassigns the request to an administrator-specified portal page (44);
intercepting, at the gateway device, the browser redirect message and modifying it with the destination address (46) as source address of the browser redirect message; and
sending the modified browser redirect message to the host, which automatically redirects the host to the portal page (48, 52, 54), wherein the automatic redirection is executed for all destination address requests from the host.

2. The method of claim 1, wherein the sending of the modified browser redirect message to the host, which automatically redirects the host to the portal page comprises redirecting the user's computer to a user-customized page.

3. The method of claim 1, wherein the sending of the modified browser redirect message to the host, which automatically redirects the host to the portal page comprises redirecting the user's computer to a customized portal page based upon the location of the user's computer.

4. The method of claim 1, wherein the sending of the modified browser redirect message to the host, which automatically redirects the host to the portal page comprises redirecting the user's computer to a portal page after a period of time has lapsed.

5. The method of claim 1, wherein the sending of the modified browser redirect message to the host, which automatically redirects the host to the portal page comprises redirecting the user's computer to a portal page created by an administrator associated with the portal page.

6. A system for redirecting a user's request for access to a destination address, via a host in communication with a network following collection of any login information received from the user to access the network, comprising:
a plurality of hosts that initiate destination address requests to an origin web page server;
the system **characterised by**,
a gateway device (42,46) in communication with the plurality of hosts, the gateway device receives the requests from the hosts for access to the destination address, stores the request, modifies the request,
a redirection server (44) in communication with the gateway device that receives the modified request from the gateway device and responds with a browser redirect message that reassigns the request to an administrator-specified portal page, wherein the gateway device intercepts the browser redirect message and modifies the response with the destination address as source address of the browser redirect message before forwarding the browser redirect message to the host; and
wherein the automatic redirection is executed for any destination address request initiated by the plurality of hosts.

7. The system of claim 6, wherein the redirection is executed by means located within the gateway device.

8. The system of claim 6, wherein the redirection is executed by means that redirects the user's computer to a user customized portal page.

9. The system of claim 6, wherein the redirection is executed by means that redirects the user's computer to a portal page after a period of time has lapsed.

10. The system of claim 6, wherein the redirection is executed by means that redirects the user's computer to a portal page created by an administrator.

## Patentansprüche

1. Verfahren zur Weiterleitung eines Zugriffswunsches eines Nutzers auf eine Zieladresse über einen mit einem Netzwerk kommunizierenden Host, bei dem
- an einem Tor von dem Host ein Zugriffswunsch auf die Zieladresse empfangen wird,
- bestimmt wird, ob der Nutzer Zugriffsberechtigung auf das Netzwerk hat,
- von dem auf das Netz zugriffsberechtigten Nutzer jegliche zusätzliche Einlogginformation eingeholt wird,
- und die gewünschte Zieladresse gespeichert wird,
**gekennzeichnet durch**
die Schritte:
Modifizierung des Wunsches am Tor und Senden des Wunsches an einen Weiterleitungsserver (42),
Beantwortung des Wunsches beim Weiterleitungsserver mit einer Browserweiterleitungsnachricht, welche den Wunsch für eine administratorspezifischen Portalseite (44) neuzuordnet,
Entgegennahme der Browserweiterleitungsnachricht am Tor und Modifizierung derselben mit der Zieladresse (46) als Quellenadresse der Browserweiterleitungsnachricht, und Senden der modifizierten Browserweiterleitungsnachricht zum Host, was den Host automatisch zur Portalseite weiterleitet (48, 52, 54), wobei die automatische Weiterleitung für alle Zieladressenwünsche vom Host durchgeführt wird.

2. Verfahren nach Anspruch 1, wobei beim Senden der modifizierten Browserweiterleitungsnachricht zum Host zur automatischen Weiterleitung des Host zur Portalseite der Computer des Nutzers zur einer auf den Nutzer abgestellten Seite weitergeleitet wird.

3. Verfahren nach Anspruch 1, wobei beim Senden der modifizierten Browserweiterleitungsnachricht zum Host zur automatischen Weiterleitung des Host zur Portalseite der Computer des Nutzers aufgrund seiner örtlichen Position zu einer kundenspezifischen Portalseite weitergeleitet wird.

4. Verfahren nach Anspruch 1, wobei beim Senden der modifizierten Browserweiterleitungsnachricht zum Host zur automatischen Weiterleitung des Host zur Portalseite der Computer des Nutzers nach Ablauf eines Zeitintervalles auf eine Portalseite weitergeleitet wird.

5. Verfahren nach Anspruch 1, wobei beim Senden der modifizierten Browserweiterleitungsnachricht zum Host zur automatischen Weiterleitung des Host zur Portalseite der Computer des Nutzers zu einer Portalseite weitergeleitet wird, die von einem der Portalseite zugeordneten Administrator erstellt worden ist.

6. System zur Weiterleitung eines Zugriffswunsches eines Nutzers auf eine Zieladresse über einen mit einem Netzwerk kommunizierenden Host nach Einholen jeglicher vom Nutzer zum Zugriff auf das Netzwerk erhaltener Einlogginformation, mit einer Mehrzahl von Hosts, welche Zieladressenwünsche zu einem Ursprungswebseitenserver initiieren,
**gekennzeichnet durch**
ein mit der Mehrzahl von Hosts kommunizierendes Tor (42,46), welches von den Hosts Zugriffswünsche zu der Zieladresse erhält, den Wunsch speichert und ihn modifiziert, einen mit dem Tor kommunizierenden Weiterleitungsserver (44), welcher den modifizierten Wunsch vom Tor erhält und mit einer Browserweiterleitungsnachricht antwortet, welche den Wunsch einer administratorspezifischen Portalseite neuzuordnet, wobei das Tor die Browserweiterleitungsnachricht entgegennimmt und die Antwort mit der Zieladresse als Quellenadresse der Browserweiterieitungsnachricht modifiziert, ehe die Browserweiterleitungnachricht an den Host weitergegeben wird, wobei die automatische Weiterleitung für jeglichen von der Mehrzahl von Hosts initiierten Zieladressenwunsch erfogt.

7. System nach Anspruch 6, bei welchem die Weiterleitung durch im Tor befindliche Mittel durchgeführt wird.

8. System nach Anspruch 6, bei welchem die Weiterleitung durch Mittel erfolgt, welche den Computer des Nutzers zu einer auf den Nutzer abgestellten Portalseite weiterleitet.

9. System nach Anspruch 6, bei welchem die Weiterleitung durch Mittel erfolgt, welche den Computer des Nutzers nach Ablauf eines Zeitintervalles zu einer Portalseite weiterleiten.

10. System nach Anspruch 6, bei welchem die Weiterleitung durch Mittel erfolgt, welche den Computer des Nutzers zu einer von einem Administrator erstellte Portalseite weiterleiten.

## Revendications

1. Procédé de redirection d'une requête d'un utilisateur demandant l'accès à une adresse de destination, par l'intermédiaire d'un hôte en communication avec un réseau, comprenant :
la réception à une passerelle d'une requête d'un hôte pour l'accès à l'adresse de destination,
la détermination du fait que l'utilisateur a des droits d'accès au réseau,
la collecte d'informations éventuelles d'enregistrement de l'utilisateur nécessaires pour l'accès au réseau, et
la mémorisation de l'adresse de destination demandée,
le procédé étant **caractérisé par** les étapes suivantes :
la modification, à la passerelle, de la requête et l'émission de la requête vers un serveur de redirection (42),
la réponse, au serveur de redirection, à la requête avec un message de redirection de navigateur qui réaffecte la requête à une page de portail spécifiée par l'administrateur (44),
l'interception, au dispositif de passerelle, du message redirigé de navigateur et sa modification par l'adresse de destination. (46) comme adresse source du message de redirection d'un navigateur, et
l'émission du message de redirection de navigateur modifié à l'hôte, qui redirige automatiquement l'hôte vers la page de portail (48, 52, 54), dans lequel la redirection automatique est exécutée pour toutes les requêtes d'adresse de destination provenant de l'hôte.

2. Procédé selon la revendication 1, dans lequel l'émission du message modifié de redirection de navigateur vers l'hôte, qui redirige automatiquement l'hôte vers la page de portail, comprend la redirection de l'ordinateur de l'utilisateur vers une page adaptée à l'utilisateur.

3. Procédé selon la revendication 1, dans lequel l'émission du message modifié de redirection de navigateur à l'hôte, qui redirige automatiquement l'hôte sur la page de portail, comprend la redirection de l'ordinateur de l'utilisateur sur une page de portail personnalisée en fonction de l'emplacement de l'ordinateur de l'utilisateur.

4. Procédé selon la revendication 1, dans lequel l'émission du message de redirection de navigateur modifié à l'hôte, qui redirige automatiquement l'hôte sur la page de portail, comprend la redirection de l'ordinateur de l'utilisateur sur une page de portail après l'écoulement d'une période.

5. Procédé selon la revendication 1, dans lequel l'émission du message de redirection de navigateur modifié vers l'hôte, qui redirige automatiquement l'hôte sur la page de portail, comprend la redirection de l'ordinateur de l'utilisateur sur une page de portail créée par un administrateur associé à la page de portail.

6. Système de redirection d'une requête d'utilisateur demandant accès à une adresse de destination, par l'intermédiaire d'un hôte en communication avec un réseau après collecte d'informations éventuelles d'enregistrement reçues de l'utilisateur pour l'accès au réseau, comprenant :
plusieurs hôtes qui déclenchent des requêtes d'adresse de destination vers un serveur de pages de toile d'origine,
le système étant **caractérisé par**
un dispositif de passerelle (42, 46) communiquant avec les hôtes, le dispositif de passerelle recevant les requêtes des hôtes demandant accès à l'adresse de destination, mémorisant la requête et modifiant la requête, et
un serveur de redirection (44) en communication avec le dispositif de passerelle qui reçoit la requête modifiée du dispositif de passerelle et répond par un message dans la direction de navigateur qui réaffecte la requête à une page de portail spécifiée par l'administrateur, le dispositif de passerelle interceptant le message de redirection du navigateur et modifiant la réponse avec l'adresse de destination comme adresse source du message de redirection de navigateur avant l'envoi du message de redirection de navigateur à l'hôte, et
dans lequel la redirection automatique est exécutée pour toute requête d'adresse de destination déclenchée par les hôtes.

7. Système selon la revendication 6, dans lequel la redirection est exécutée par un dispositif disposé dans le dispositif de passerelle.

8. Système selon la revendication 6, dans lequel la redirection est exécutée par un dispositif destiné à rediriger l'ordinateur de l'utilisateur vers une page de portail personnalisée pour l'utilisateur.

9. Système selon la revendication 6, dans lequel la redirection est exécutée par un dispositif qui redirige l'ordinateur de l'utilisateur sur une page de portail après l'écoulement d'une période.

10. Système selon la revendication 6, dans lequel la redirection est exécutée par un dispositif qui redirige l'ordinateur de l'utilisateur sur une page de portail créée par un administrateur.
